# EUROPÄISCHE PATENTANMELDUNG

(11) **EP 4 194 141 A1**
(43) Veröffentlichungstag der Anmeldung: **14.06.2023**
(21) Anmeldenummer: 22200850.0
(22) Anmeldetag: 11.10.2022
(51) Int. Cl.: B23Q 1/00

(54) **SPANNEINRICHTUNG**

(30) Priorität: 13.12.2021 CH 0707042021
(71) Anmelder: Erowa AG, 5734 Reinach (CH)
(72) Erfinder: Hediger, Hans, 5734 Reinach (CH)
(74) Vertreter: Hering, Hartmut

(57) **Zusammenfassung**

Die Erfindung betrifft eine Spanneinrichtung mit einer auf einem Spannuntersatz befestigbaren Spannvorrichtung (1) und einem daran festspannbaren Spannelement (26). Die Spannvorrichtung (1) weist ein mit Spannorganen (15) versehenes Spannmodul (2) aufweist, welches mittels eines Fixierelements (3) auf dem Spannuntersatz fixierbar ist, wobei das Fixierelement (3) derart ausgebildet ist, dass das Spannmodul (2) damit in der X-Y-Ebene schwimmend auf dem Spannuntersatz fixiert wird. Das Spannmodul (2) ist im fixierten Zustand des Fixierelements (3) gegenüber dem Fixierelement (3) in der X-Y-Ebene verschiebbar, in Z-Richtung jedoch unverschiebbar ist, wobei das Fixierelement (3) mit Z-Auflageflächen (24) für das Spannelement (26) versehen ist. Eine derartige Spanneinrichtung eignet sich in besonders vorteilhafter Weise als Modul zum Aufbauen eines grossen Spannsystems, mit dem thermisch bedingte Dimensionsänderungen des Werkstückträgers gegenüber dem Spannuntersatz bei hoher Repetiergenauigkeit ausgeglichen werden können, ohne dass das Spannsystem in der X-Y-Ebene geometrisch/mechanisch überbestimmt ist.

## Beschreibung

Die vorliegende Erfindung bezieht sich auf eine gemäss dem Oberbegriff des Anspruchs 1 ausgebildete Spanneinrichtung.

Spanneinrichtungen der hier zur Rede stehenden Art dienen dem positionsdefinierten Festspannen von Spannelementen mittels einer Spannvorrichtung. Dabei wird die jeweilige Spannvorrichtung üblicherweise fest auf einem Spannuntersatz montiert, beispielsweise auf einem Maschinentisch einer Bearbeitungsmaschine, während das Spannelement bzw. die Spannelemente im Allgemeinen an Werkstückträgern -Palettenangeordnet werden.

Um grosse Werkstückträger positionsgenau festspannen zu können, kommt im Allgemeinen ein Spannsystem mit mehreren auf einem Spannuntersatz montierten Spannvorrichtung und einer entsprechenden Anzahl an einem Werkstückträger montierten Spannelementen zum Einsatz. Ein Problem solcher Spannsysteme besteht darin, dass sie Dimensionsänderungen des Werkstückträgers gegenüber dem Spannuntersatz ausgleichen müssen. Zudem muss darauf geachtet werden, dass das Spannsystem in der X-Y-Ebene geometrisch/mechanisch nicht überbestimmt ist.

Um Dimensionsänderungen des Werkstückträgers gegenüber dem Spannuntersatz auffangen zu können, sind aus dem Stand der Technik Nullpunktspannsysteme mit Spannfuttern zum Festspannen von Spannbolzen bekannt, wobei die Spannfutter mit konischen, in radialer Richtung elastisch gelagerten Aufnahmen für den Spannbolzen versehen sind. Bei derartigen Systemen ist eine sehr hohe Fertigungsgenauigkeit der Einzugselemente untereinander nötig.

Um eine geometrische Überbestimmung der genannten Art zu vermeiden, ist aus der EP 0 403 428 A2 eine Vorrichtung zum positionsdefinierten Aufspannen eines Werkstücks bekannt. Diese Vorrichtung weist zumindest zwei mit Zentrierzapfen versehene Spannfutter und eine entsprechende Anzahl von mit Spannzapfen versehenen und daran festspannbaren Oberteilen auf. Die Oberteile sind an einer Werkstückaufnahme angeordnet. Das jeweilige Oberteil ist mit, zu den Zentrierzapfen korrespondierenden, Zentrierschlitzen versehen. Zudem weist jedes Oberteil einen runden Spannzapfen - Zugbolzen- auf, der in einer zentralen Aufnahme des jeweiligen Spannfutters mittels Spannkugeln festspannbar ist. Während jedes Spannfutter mit vier Zentrierzapfen versehen ist, ist nur das eine Oberteil mit vier korrespondierenden Zentrierschlitzen versehen. Das andere Oberteil bzw. die anderen Oberteile ist/sind nur mit zwei Zentrierschlitzen versehen. Somit soll mit dem einen Oberteil die Lage der Werkstückaufnahme in X- und Y-Richtung festgelegt werden, während mit dem anderen Oberteil bzw. den anderen Oberteilen nur die Winkellage um die Z-Achse festgelegt werden soll.

Obwohl sich einer derartige Vorrichtung in der Praxis bewährt hat, ist deren Aufbau relativ komplex und eignet sich nur bedingt zum wiederholbar genauen Festspannen von grossen und schweren Werkstückträgern, zumal der jeweilige runde Spannzapfen in Bezug auf die zentrale und ebenfalls runde Aufnahme des jeweiligen Spannfutters sehr genau positioniert sein muss. Zudem können Dimensionsänderungen des Werkstückträgers gegenüber den Spannfuttern nur bedingt aufgefangen werden.

Des Weiteren ist aus der EP 1 743 733 A1 eine Schnellspann-Vorrichtung mit Austauschzylinder bekannt. Die Schnellspann-Vorrichtung umfasst neben einem mit einer Palette zu verbindenden Einzugsnippel ein Verschlussgehäuse, das von oben mittels eines Deckels verschlossen ist. Der Deckel besitzt eine Einlauföffnung für den genannten Einzugsnippel. Im Innenraum des Verschlussgehäuses ist eine Fangvorrichtung für den Einzugsnippel angeordnet, welche aus einer Anzahl von gleichmässig über den Umfang verteilten Verriegelungskörpern besteht. Die Betätigung der Verriegelungskörper erfolgt über einen in der Innenseite des Verschlussgehäuses angeordneten, mittels eines Federpakets in eine Spannstellung belasteten Kolben. Im Verschlussgehäuse ist der topfförmig ausgebildete Austauschzylinder aufgenommen, welcher schwimmend in dem Gehäuse gelagert ist. Der Austauschzylinder ist in der X-Y-Ebene jedoch spielfrei gelagert, da der Kolben in radialer Richtung spielfrei in dem Deckel geführt ist und der Austauschzylinder den Kolben wiederum radial spielfrei aufnimmt.

Die EP 0 818 270 A1 offenbart eine Spannvorrichtung mit einem an der Werkzeugmaschine anzuordnenden Spannelement und einem daran festspannbaren Werkstückträger. Das runde Spannelement ist mit einem zentralen Spannbolzen versehen, der spielfrei in den Grundkörper des Spannelements eingesetzt ist. Der runde Werkstückträger weist eine zentrale Bohrung auf, an deren Seitenwänden der Spannbolzen des Werkstückträgers zum Festspannen desselben angreifen kann. Der Werkstückträger ist mit einem ringförmig umlaufenden, nach unten vorstehenden Abstützorgan versehen, das das die Zentrierorgane vorn Beschädigung schützt.

Schliesslich ist aus der DE 29802835U1 eine Kupplung mit zwei Kupplungsorganen und einer Spannvorrichtung bekannt, welche zur Positionierung in der X-Y-Ebene am ersten Kupplungsorgan angeordnete xy-Referenzelemente und am zweiten Kupplungsorgan angeordnete xy-Referenzgegenelemente aufweist. Während die am zweiten Kupplungsorgan angeordneten xy-Referenzgegenelemente fest ausgebildet sind, sind die am ersten Kupplungsorgan angeordneten xy-Referenzelemente elastisch nachgiebig gestaltet. Durch geeignete Auslegung der elastischen Referenzelemente soll sich eine thermische Lageabweichung auf mehrere Schultern, d.h. elastische Referenzelemente aufteilen mit der Folge, dass die enge Toleranz der Lagepositionierung eingehalten werden können soll.

Aufgabe der Erfindung ist es, eine dem eingangs genannten technischen Gebiet zugehörende Spanneinrichtung zu schaffen, wobei die Spannvorrichtung in der X-Y-Ebene Toleranzen bzw. Dimensionsänderungen eines Werkstückträgers, welcher mittels eines Spannelements bzw. Spannelementen an der jeweiligen Spannvorrichtung festgespannt wird, aufnehmen oder ausgleichen können soll, ohne dass elastische Zentrierelemente vorgesehen werden müssen, wobei sich die Spanneinrichtung insbesondere auch als Modul zum Aufbauen eines Spannsystems eignen soll.

Die Lösung der Aufgabe ist durch die Merkmale des Anspruchs 1 definiert. Gemäss der Erfindung weist die Spanneinrichtung eine auf einem Spannuntersatz zu befestigende Spannvorrichtung und ein daran festspannbares Spannelement auf, wobei die Spannvorrichtung ein mit Spannorganen versehenes Spannmodul aufweist, welches mittels eines Fixierelements auf dem Spannuntersatz fixierbar ist, und wobei das Fixierelement derart ausgebildet ist, dass das Spannmodul damit in der X-Y-Ebene verschiebbar auf dem Spannuntersatz fixierbar ist.

Indem das Spannmodul der Spannvorrichtung mittels des Fixierelements in der X-Y-Ebene verschiebbar auf dem Spannuntersatz befestigt ist, wird die grundsätzliche Voraussetzung geschaffen, damit die jeweilige Spannvorrichtung Dimensionsänderungen eines auf dem Spannuntersatz festzuspannenden Werkstückträgers aufnehmen kann.

Bevorzugte Ausführungsformen und Weiterbildungen der Spanneinrichtung sind in den abhängigen Ansprüchen 2 bis 12 umschrieben.

So ist bei einer bevorzugten Weiterbildung vorgesehen, dass das Spannmodul im fixierten Zustand des Fixierelements gegenüber dem Fixierelement in der X-Y-Ebene verschiebbar ist, während es in Z-Richtung mittels Spielpassung in dem Fixierelement aufgenommen und damit in Z-Richtung im Wesentlichen unverschiebbar ist, und dass das Fixierelement mit Z-Auflageflächen für das Spannelement versehen ist. Dadurch wird sichergestellt, dass das Spannmodul in der X-Y-Ebene Toleranzen auszugleichen vermag in Z-Richtung jedoch Spannkräfte übertragen kann, und dass die Z-Positionierung des Spannelements an dem unverrückbaren Fixierelement stattfindet, welches, im Gegensatz zum Spannmodul, wesentlich einfacher für die Aufnahme hoher Kräfte in Z-Richtung ausgebildet werden kann. Zudem sind die Anforderungen an die Fertigungstoleranzen gegenüber Spannsystemen mit konischen Zentrierelementen wesentlich geringer, da der Einzug nur genügend gross sein muss, um Toleranzen auszugleichen.

Bei einer besonders bevorzugten Weiterbildung weist das Fixierelement Zentriernuten oder Zentriernocken und das Spannelement korrespondierend dazu ausgebildete Zentriernocken bzw. Zentriernuten zum Zentrieren des Spannelements gegenüber dem Fixierelement in der X-Y-Ebene in einer Richtung auf. Diese Ausbildung ist insbesondere für Nullpunktspannsysteme mit mehreren Spanneinrichtungen vorteilhaft, da mittels den Zentrierelementen die Verschiebbarkeit eines Spannmoduls gegenüber der zugeordneten Spannvorrichtung auf eine Richtung begrenzt werden kann, so dass bei entsprechender Anordnung der Spannvorrichtungen und der Spannelemente der Nullpunkt des Spannsystems trotz Verschiebbarkeit des jeweiligen Spannmoduls immer an der gleichen Stelle ist, was letztlich ein sehr genaues Spannen ermöglicht.

Vorzugsweise ist das Spannmodul im Wesentlichen zylindrisch und das Fixierelement im Wesentlichen ringförmig ausgebildet, wobei das Spannmodul in der X-Y-Ebene mit radialem Spiel schwimmend im Fixierelement aufgenommen ist. Diese Ausbildung ermöglicht eine besonders einfache Ausbildung des Spannmoduls in Kombination mit einer universellen Einsetzbarkeit. Dank dieser Ausbildung müssen bei der Montage nur die Zentrierelemente der Spannvorrichtung winkelgerecht positioniert/ausgerichtet werden, nicht jedoch das Spannmodul selber.

Bei einer besonders bevorzugten Weiterbildung ist das Spannmodul auf der Aussenseite mit einer umlaufenden Schulter und das Fixierelement auf der Innenseite mit einer korrespondierend dazu ausgebildeten Ausnehmung versehen, wobei der Aussendurchmesser der Schulter um zumindest 0,2 mm, insbesondere um zumindest 0,5 mm kleiner ist als der Durchmesser der Ausnehmung. Die Differenz zwischen Aussendurchmesser der Schulter und Durchmesser der Ausnehmung bestimmt die maximale Verschiebbarkeit des Spannmoduls im fixierten Zustand in der X-Y-Ebene. Diese Ausbildung ist einfach und kostengünstig zu realisieren.

Vorzugsweise ist das Spannmodul in Z-Richtung mittels Spielpassung in dem Fixierelement aufgenommen, insbesondere indem die Höhe der Schulter derart an die Höhe der Ausnehmung angepasst ist, dass in Z-Richtung eine Spielpassung zwischen der Schulter und der Ausnehmung gebildet ist. Mit einer solchen Ausbildung kann trotz Verschiebbarkeit des Spannmoduls in der X-Y-Ebene sichergestellt werden, dass das Spannmodul in Z-Richtung formschlüssig im Fixierelement abgestützt ist und hohe Spannkräfte übertragen kann

Eine weitere bevorzugte Weiterbildung sieht vor, dass das Spannmodul mit einer Vielzahl von über den Umfang verteilt angeordneten Spannorganen versehen ist, und das Spannelement auf der Innenseite mit einer ringförmig umlaufenden Spannfläche versehen ist, an welcher sich die Spannorgane zum Festspannen anlegen. Eine solche Ausbildung eignet sich in besonders vorteilhafter Weise zum Übertragen von hohen Spannkräften, da das Spannmodul, über den Umfang verteilt, mit sehr vielen Spannorganen in der Grössenordnung von ca. 10 bis 20 Stück, und das Spannmodul mit einer entsprechend grossen Spannfläche versehen werden kann.

Besonders bevorzugt weist das Spannmodul einen federbelasteten Betätigungskolben auf, der zur Betätigung der Spannorgane axial beweglich im Innern des Spannmoduls angeordnet ist. Eine derartige Ausbildung ist einfach zu realisieren und ermöglicht eine zuverlässige Funktion der Spannvorrichtung.

Ganz besonders bevorzugt ist der Betätigungskolben von einer Wirkstellung, in der er unter der Wirkung von Federn steht und die Spannorgane radial nach aussen drückt, pneumatisch oder hydraulisch in eine Ausgangsstellung verschiebbar, in welcher die Spannorgane entlastet und radial nach innen schiebbar sind. Bei dieser Ausbildung verharrt der Betätigungskolben unter der Wirkung der Federn auch im drucklosen Zustand in der Wirkstellung, so dass das jeweilige Spannelement sicher an der Spannvorrichtung festgespannt ist, auch wenn beispielsweise ein Druckabfall im pneumatischen oder hydraulischen System auftreten sollte, zumal der Betätigungskolben insbesondere mittels Selbsthemmung in der Verriegelungsposition gehalten wird.

Vorzugsweise steht der Betätigungskolben in Wirkverbindung mit einem in Z-Richtung verschiebbaren Ausstosselement, welches mittels des Betätigungskolbens über die Oberseite des Spannmoduls hinaus bewegbar ist. Ein solches Ausstosselement kann als eine Art Stossdämpfer beim Aufsetzen eines Werkstückträgers wirken. Zudem kann damit ein Werkstückträger leicht angehoben werden, was u.a. auch vorteilhaft ist, um die Spannorgane mittels des Spannelements in die zurückgeschoben Ausgangsstellung zu bringen.

Bei einer ganz besonders bevorzugten Weiterbildung der Spanneinrichtung weist der Betätigungskolben in Z-Richtung verlaufende Vertiefungen auf, welche derart auf die Spannorgane abgestimmt sind, dass diese in der Wirkstellung des Betätigungskolbens zumindest linienförmig an diesem zur Anlage kommen. Durch solche Vertiefungen wird im Belastungszustand, namentlich wenn beim Festspannen eines Spannelements hohe Spannkräfte auf die Spannorgane einwirken, eine vergrösserte Auflagefläche zwischen dem jeweiligen Spannorgan und dem Betätigungskolben bewirkt, so dass im Vergleich zu herkömmlichen Spanneinrichtungen, bei denen die Spannkugeln punktförmig an einer ebene Fläche zur Anlage kommen, wesentlich höhere Kräfte übertragen werden können.

Vorzugsweise ist die Oberseite des Spannmoduls kegelstumpfförmig ausgebildet, wobei das Ausstosselement im Zentrum des Kegelstumpfes angeordnet ist. Diese Ausbildung hilft, um beim Aufsetzen eines Werkstückträgers bzw. Spannelements diesen/dieses gegenüber der Spannvorrichtung nach dem groben Ausrichten zu zentrieren, indem das jeweilige Spannelement selbsttätig dem Kegelstumpf entlang gleitet uns sich dabei zentriert.

Eine weitere Ausführungsform der Erfindung besteht in einem Spannsystem, bei welchem erfindungsgemäss gestaltete Spanneinrichtungen in besonders vorteilhafter Weise zu einer Spannanordnung angeordnet sind. Ein solches Spannsystem ist durch die Merkmale des Anspruchs 13 definiert und eignet sich in besonders vorteilhafter Weise zum Festspannen von grossen bis sehr grossen Werkstückträgern. Indem das jeweilige Spannmodul in der X-Y-Ebene schwimmend bzw. verschiebbar gelagert ist und die jeweilige Spannvorrichtung mit ersten Zentrierelementen und das dazugehörige Spannelement mit dazu korrespondierenden weiteren Zentrierelementen zum Zentrieren des jeweiligen Spannelements gegenüber der Spannvorrichtung in einer Richtung in der X-Y-Ebene versehen ist, wobei zumindest bei zwei Spannvorrichtungen und zwei korrespondierend dazu angeordneten Spannelementen die Richtungen in der X-Y-Ebene unterschiedlich sind, können Dimensionsänderungen des Werkstückträgers bei gleichbleibendem Nullpunkt und hoher Spanngenauigkeit aufgefangen werden.

Bevorzugte Weiterbildungen des Spannsystems sind in den abhängigen Ansprüchen 14 bis 17 definiert.

So wird bei einer bevorzugten Weiterbildung des Spannsystems vorgeschlagen, dass der Spannuntersatz im Wesentlichen rechteckig ausgebildet ist und eine gerade Anzahl an Spannvorrichtungen aufweist, wobei zumindest in jedem Eckbereich eine Spannvorrichtung angeordnet ist, wobei die durch die Zentrierelemente der jeweiligen, im Eckbereich angeordneten Spannvorrichtung führenden Längsachsmittelachsen auch durch das Zentrum von einander diagonal gegenüberliegenden Spannvorrichtungen führen. Diese Ausbildung ergibt ein sehr stabiles Spannsystem mit welchem insbesondere thermisch bedingte Dimensionsänderungen des Werkstückträgers aufgefangen werden können.

Bei einer bevorzugten Weiterbildung des Spannsystems ist der Werkstückträger im Wesentlichen rechteckig ausgebildet ist und zumindest in jedem Eckbereich ein Spannelement angeordnet, wobei die durch die Zentrierelemente der jeweiligen, im Eckbereich angeordneten Spannelemente führenden Längsachsmittelachsen auch durch das Zentrum von einander diagonal gegenüberliegenden Spannelementen führen. Damit wird sichergestellt, dass der Nullpunkt des Spannsystems an einer definierten Stelle ist und dort verharrt, auch wenn sich einzelne oder sämtliche Spannmodule zum Anpassen an Dimensionsänderungen des Werkstückträgers in der X-Y-Ebene verschieben.

Besonders bevorzugt ist das jeweilige Spannelement derart in einer Ausnehmung des Werkstückträgers angeordnet, dass dessen plane Unterseite gegenüber der Unterseite des Werkstückträgers zurückversetzt ist. Auf diese Weise ist das jeweilige Spannelement insbesondere vor mechanischen Beschädigungen geschützt im Werkstückträger aufgenommen.

Schliesslich ist im Anspruch 18 ein Spannelement definiert, welches sich in besonders vorteilhafter Weise zur Verwendung in einer Spanneinrichtung nach einem der Ansprüche 1 bis 12 oder in einem Spannsystem nach einem der Ansprüche 13 bis 17 eignet. Ein solches Spannelement ist robust, einfach aufgebaut und kann kostengünstig hergestellt werden.

Aus der nachfolgenden Detailbeschreibung und der Gesamtheit der Patentansprüche ergeben sich weitere vorteilhafte Ausführungsformen und Merkmalskombinationen der Erfindung.

Kurze Beschreibung der Zeichnungen.

Die Figuren der zur Erläuterung eines Ausführungsbeispiels verwendeten Zeichnungen zeigen:
- Fig. 1: die aus einer Spannvorrichtung und einem Spannelement bestehende Spanneinrichtung in perspektivischer Darstellung;
- Fig. 2: Einzelteile der Spannvorrichtung gemäss Fig. 1 in explodierter Darstellung;
- Fig. 3: die Spannvorrichtung und das Spannelement in geschnittener Darstellung;
- Fig. 4: einen Schnitt durch die Spannvorrichtung in der Ausgangsstellung zusammen mit dem lose darauf aufgesetzten, an einem Werkstückträger befestigten Spannelement;
- Fig. 5: einen Schnitt durch die Spannvorrichtung zusammen mit dem daran festgespannten, an dem Werkstückträger befestigten Spannelement;
- Fig. 6: ein Spannsystem mit vier erfindungsgemäss gestalteten Spannvorrichtungen in perspektivischer Ansicht;
- Fig. 7: ein Spannsystem mit drei erfindungsgemäss gestalteten Spannvorrichtungen in perspektivischer Ansicht;
- Fig. 8: ein alternatives Ausführungsbeispiel einer Spannvorrichtung zusammen mit einem Werkstückträger.

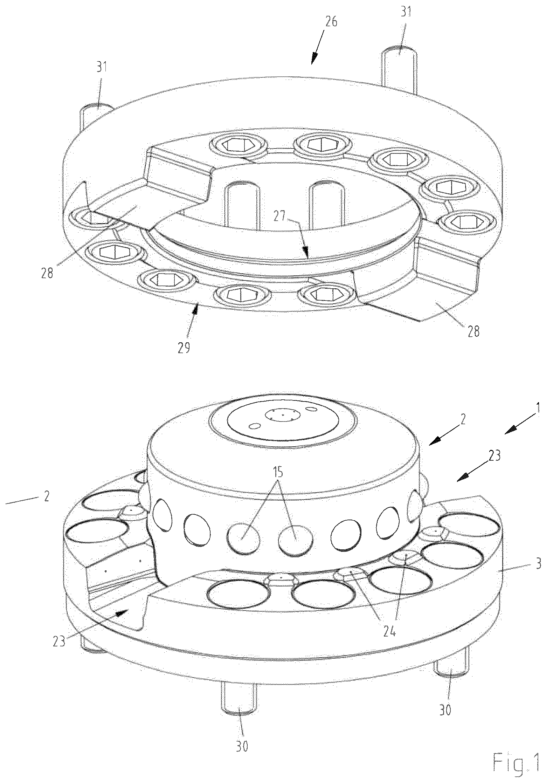

Die Fig. 1 zeigt die Spanneinrichtung in perspektivischer Ansicht. Die Spanneinrichtung umfasst eine auf einem Spannuntersatz wie einem Maschinentisch zu befestigende Spannvorrichtung 1, auch Spannfutter genannt, und ein daran festspannbares Spannelement 26, welches an einer als Werkstück- oder Werkzeugträger dienenden Palette angeordnet wird. Die Befestigung der Spannvorrichtung 1 am Spannuntersatz wie auch des Spannelements 26 am Werkstückträger erfolgt mittels einer Vielzahl von Schrauben 30, 31, von denen einige andeutungsweise eingezeichnet sind. Die Spannvorrichtung 1 umfasst ein Spannmodul 2 und ein Fixierelement 3. Das Fixierelement 3 dient der schwimmenden Befestigung des Spannmoduls 2 auf dem Spannuntersatz, derart, dass es in der X-Y-Ebene nach dem Anbringen des Fixierelements noch verschiebbar ist. Konkret wird das Spannmodul 2 mittels des Fixierelements 3 derart auf dem Spannuntersatz / Maschinentisch befestigt, dass es in der durch die Oberseite des Spannuntersatzes gebildeten X-Y-Ebene eine Bewegung in der Grössenordnung von ca. ± 0,1 bis 1mm relativ zum Fixierelement 3 ausführen kann. Ja nach Ausführung sind auch grössere Bewegungen von beispielsweise bis zu ca. ± 2mm möglich. Details hierzu werden anschliessend noch genauer erläutert. Das Spannmodul 2 ist mit einer Vielzahl von entlang des Umfangs verteilt angeordneten Spannorganen in Form von Spannkugeln 15 versehen, mittels welchen das Spannelement 26 an der Spannvorrichtung 1 festgespannt werden kann. Das im Wesentlichen ringförmig gestaltete Fixierelement 3 ist mit zwei einander diametral gegenüberliegenden Zentriernuten 23 versehen, welche korrespondierend zu zwei am Spannelement 26 angeordneten Zentriernocken 28 ausgebildet und angeordnet sind. Diese Zentrierelemente 23, 28 ermöglichen eine Ausrichtung des Spannelements 26 beim Festspannen an der Spannvorrichtung 1 in einer Richtung.

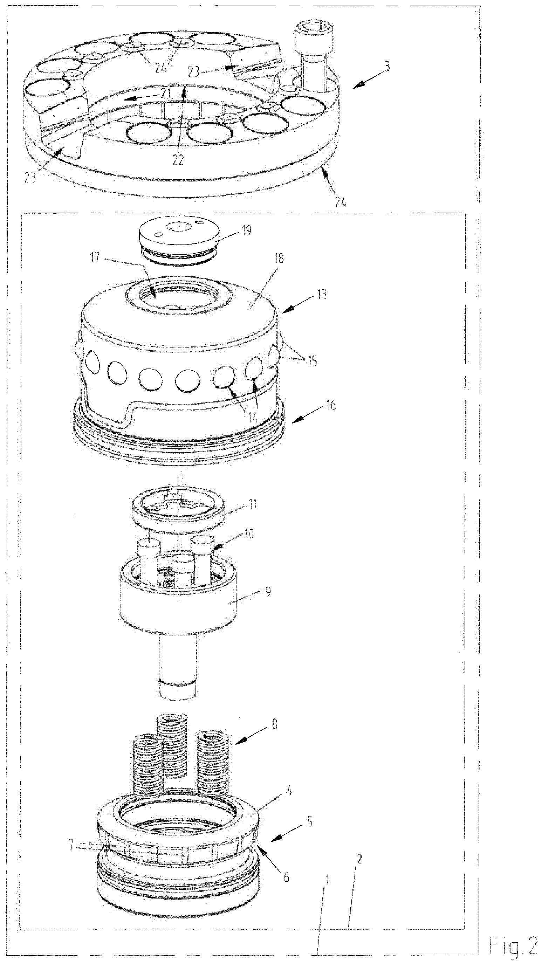

Anhand der Figur 2, welche wesentliche Einzelteile der Spannvorrichtung 1 in explodierter Darstellung zeigt, wird der Aufbau der Spannvorrichtung 1 näher erläutert. Von unten nach oben gesehen umfasst das Spannmodul 2 einen Betätigungskolben 4, drei Druckfedern 8, einen Einsatz 9, drei Stössel 10, einen Haltering 11, ein Spanngehäuse 13, das mit radialen Bohrungen 14 zur Aufnahme der Spannkugeln 15 versehen, sowie ein Ausstosselement 19. Der im Innern des Spanngehäuses 13 anzuordnende Betätigungskolben 4 ist mit einer ringförmigen Nut 5 versehen, in welche sich die Spannkugeln 15 mit ihrer Innenseite erstrecken können. Die Nut 5 wird beidseitig durch je eine schräg verlaufende Ringfläche begrenzt. Oberhalb der Nut 5 ist eine entlang des äusseren Umfangs des Betätigungskolbens 4 verlaufende, sich im Durchmesser nach unten verkleinernde Druckfläche 6 angeordnet, welche dem Betätigen der Spannkugeln 15 dient, indem die Spannkugeln 15 beim Herunterfahren des Betätigungskolbens 4 radial nach aussen, d.h. aus dem Spanngehäuse 13 hinaus gedrückt werden. In diese Druckfläche 6 sind axial, d.h. in Z-Richtung, verlaufende Vertiefungen 7 eingelassen, welche auf die Spannkugeln 15 derart abgestimmt sind, dass beim Übertragen hoher Spannkräfte eine vergrösserte Auflagefläche zwischen der jeweiligen Spannkugel 15 und dem Betätigungskolben 4 bewirkt wird, so dass im Vergleich zu herkömmlichen Spanneinrichtungen, bei denen die Spannkugeln punktförmig an einer ebenen Spannfläche zur Anlage kommen, höhere Spannkräfte übertragen werden können

Das Spanngehäuse 13 ist auf der Unterseite mit einer aussen ringförmig umlaufenden Schulter 16 versehen, welche dem Fixieren des Spanngehäuses 13 bzw. des Spannmoduls 2 auf einem Spannuntersatz mittels des Fixierelements 3 dient. Die Oberseite des Spanngehäuses 13 ist kegelstumpfförmig ausgebildet, so dass eine konische Zentrierfläche 18 gebildet wird. In diese kegelstumpfförmige Oberseite des Spanngehäuses 13 ist eine zentrale Bohrung 17 eingelassen, welche der Aufnahme des Ausstosselements 19 dient. Das im Zentrum des Kegelstumpfes angeordnete Ausstosselement 19 ist mit einer konischen Oberseite versehen, welche zumindest teilweise an die Form und Neigung der kegelstumpfförmigen Oberseite des Spanngehäuses 13 angepasst ist. Die kegelstumpfförmige Oberseite des Spanngehäuses 13 bildet somit zusammen mit dem Ausstosselement 19 eine grosse Zentrierfläche für das jeweilige Spannelement beim Aufsetzen auf das Spannmodul 2.

Das Fixierelement 3 ist auf der Innenseite mit einer umlaufenden Ausnehmung in Form einer Nut 21 versehen, welche auf die Schulter 16 des Spanngehäuses 13 abgestimmt ist. In Z-Richtung wird die Nut 21 nach oben durch einen sich nach innen erstreckenden Vorsprung 22 begrenzt, der den Z-Anschlag für die Schulter 16 bildet. Die Nut 21 besitzt einen geringfügig grösseren Durchmesser als die Schulter 16 des Spanngehäuses 13, so dass eine schwimmende bzw. verschiebbare Fixierung des Spannmoduls 2 in der X-Y-Ebene ermöglicht wird, wie nachfolgend noch näher erläutert wird. Auf seiner Oberseite ist das Fixierelement 3 mit erhöhten, als Z-Auflage für die plane Unterseite des Spannelements dienenden Auflageflächen 24 versehen. Da das Fixierelement 3 mit seiner grossflächigen Unterseite auf einem Spannuntersatz zur Auflage kommt, kann es, bei einfacher Bauweise, hohe und in Z-Richtung auf die Auflageflächen 24 einwirkende Spannkräfte aufnehmen. Das Spannmodul 2 mit solchen Z-Auflageflächen für einen Werkstückträger oder das Spannelement 26 zu versehen wäre jedenfalls wesentlich aufwändiger. Zudem sind die beiden in das Fixierelement 3 eingelassenen, einander diametral gegenüberliegenden Zentriernuten 23 ersichtlich.

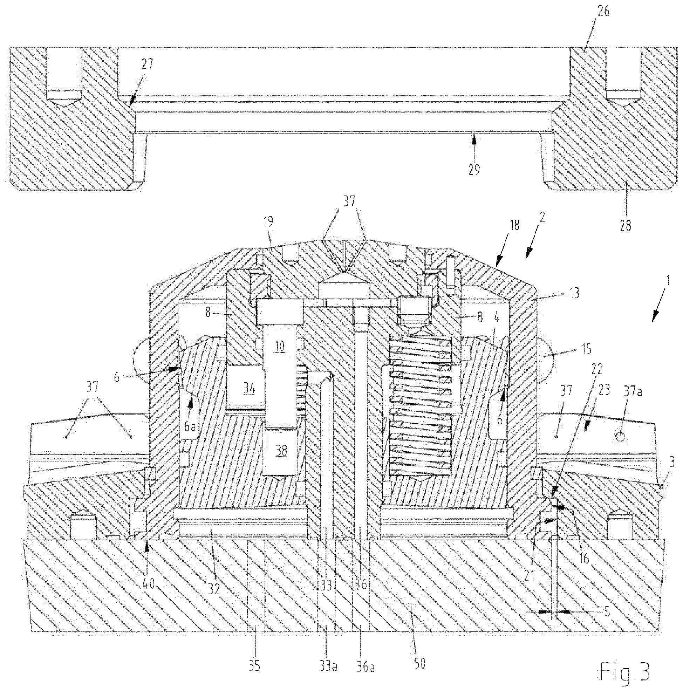

Die Fig. 3 zeigt einen Schnitt durch das Spannelement 26 im Bereich von dessen Zentriernocken 28 sowie die sich im Verriegelungszustand befindende Spannvorrichtung 1. Das Spannmodul 2 ist mittels des Fixierelements 3 auf einem nur andeutungsweise dargestellten Spannuntersatz 50 fixiert. Im fixierten Zustand erstreckt sich die ringförmige Schulter 16 des Spannmoduls 2 in radialer Richtung in die Nut 21 des Fixierelements 3. Während zwischen der Oberseite der Schulter 16 und dem die Nut 21 nach oben begrenzenden Vorsprung 22 des Fixierelements 3 eine sogenannte "Spielpassung" besteht, d.h. es ist ein sehr geringer Abstand zwischen der Oberseite der Schulter 16 und der oberen Begrenzung der Nut 21 in der Grössenordnung von einigen Mikrometern vorgesehen, beispielsweise nach ISO H7/g6, besteht bei zentriertem Spannmodul 2 in radialer Richtung zwischen der Seitenfläche der Schulter 16 und der seitlichen Wandung der in das Fixierelement eingelassen Nut 21 ein umlaufender Spalt S. Dieser Spalt S ermöglicht, dass das Spannmodul 2 radial, d.h. in der X-Y-Ebene, aus der hier gezeigten Mittellage um die Grösse des Spalts S in alle Richtungen verschoben werden kann, was im vorliegenden Fall teilweise auch als schwimmende Lagerung bezeichnet wird. Durch die Grösse dieses Spalts S wird der maximale Verschiebeweg des Spannmoduls 2 gegenüber dem Fixierelement 3 bestimmt. Vorzugsweise beträgt dieser Spalt S zumindest 0,1 mm, so dass das Spannmodul aus der zentrierten Mittellage heraus um zumindest ± 0,1mm in der X-Y-Ebene verschoben werden kann. Allerdings ist unter schwimmender Lagerung nicht zwingend eine Lagerung zu verstehen, bei der das Spannmodul radial in alle Richtungen, d.h. um 360° verschiebbar ist, sondern ggf. kann es genügen, den Bereich der Verschiebbarkeit bzw. schwimmenden Lagerung einzuschränken, im Extremfall auf eine Richtung einzuschränken. Der Aussendurchmesser der Schulter 16 ist bei einer mittleren Baugrösse der Spannvorrichtung um ca. 0,2 bis 1mm kleiner als der Innendurchmesser der Ausnehmung 21 im Fixierelement 3, so dass das Spannmodul aus der zentrierten Mittellage radial um ca. 0,1 und 0,5mm in der X-Y-Ebene verschoben werden kann. Unter mittlerer Baugrösse wird eine Spannvorrichtung 1 verstanden, deren Spannmodul 2 einen Durchmesser zwischen ca. 8 und 12cm und eine Höhe zwischen ca. 5 und 8cm aufweist. Die Grösse des Spaltes S bzw. der Unterschied zwischen dem Aussendurchmesser der Schulter 16 und dem Innendurchmesser der Ausnehmung 21 hängt insbesondere von der Baugrösse der jeweiligen Spannvorrichtung ab, zumal unterschiedliche Baugrössen für unterschiedlich grosse Werkstückträger vorgesehen werden können. Es versteht sich, dass grössere Werkstückträger, absolut gesehen, auch grösseren Dimensionsänderungen, insbesondere thermisch bedingten Dimensionsänderungen, unterliegen können. Ein anderes Kriterium für die Grösse des Spaltes S kann zudem auch davon abhängen, welche Materialen für den Werkstückträger und den Spannuntersatz zum Einsatz kommen, zumal unterschiedliche Materialien zumeist unterschiedliche Wärmeausdehnungskoeffizienten haben, was beispielsweise bei einem Spannuntersatz aus Stahl und einem Werkstückträger aus Aluminium, wie es in der Praxis häufig vorkommt, der Fall ist. Daher ist es durchaus möglich, dass bei gewissen Ausführungsformen ein Spalt S von mehr als einem Millimeter vorgesehen werden kann. Beispielsweise kann bei bestimmten Bauformen, insbesondere bei sehr grossen Ausführungen, ein Spalt S in der Grössenordnung von bis zu ca. 2mm vorgesehen werden, was einem möglichen Verschiebeweg des Spannmoduls 2 gegenüber dem Fixierelement 3 von ± 2mm entspricht.

Der im Innern des Spannmoduls 2 angeordnete Betätigungskolben 4 ist in axialer, d.h. in Z- Richtung, zwischen einer oberen Ausgangsstellung und der hier dargestellten unteren Verriegelungsstellung verschiebbar. Im vorliegenden Beispiel befindet sich der Betätigungskolben 4 unter der Wirkung der Druckfedern in seiner nach unten verschobenen Verriegelungsstellung. Beim Herunterfahren drückt der Betätigungskolben 4 mit seiner auf der Aussenseite angeordneten, sich nach oben leicht konisch erweiternden Druckfläche 6 die Spannkugeln 15 radial nach aussen. Unterhalb der eigentlichen Druckfläche 6 verläuft eine Hubfläche 6a, welche, im Gegensatz zur Druckfläche 6, mit der Horizontalen einen kleinen Winkel einschliesst. Die Hubfläche 6a bewirkt, dass beim Herunterfahren des Betätigungskolbens 4 die Spannkugeln 15 in einer ersten Phase, pro Wegstrecke -Hub- des Betätigungskolbens 4, radial schnell bzw. weit nach aussen geschoben werden, während in einer zweiten Phase, durch die Druckfläche 6 nur noch eine vergleichsweise geringe radiale Verschiebung der Spannkugeln 15 pro Wegstrecke - Hub- des Betätigungskolbens 4 bewirkt wird. Die Geometrie der Druckfläche 6 ist zudem so ausgelegt, dass der Betätigungskolben 4 mittels Selbsthemmung in der Verriegelungsstellung verharrt. Eine solche Ausbildung eines zweistufigen "Einzugs" in Kombination mit einer schwimmenden Lagerung des jeweiligen Spannmoduls stellt, im Vergleich mit konischen Zentrierelementen, welche sehr genau aufeinander abgestimmt sein müssen, geringere Anforderungen an die Fertigungstoleranzen der für das Zentrieren massgebenden Elemente.

Des Weiteren ist in der Schnitt-Darstellung gemäss Fig. 3 erkennbar, dass von der Unterseite her eine Hydraulikleitung 33 und eine Pneumatikleitung 36 über den Schaft des Einsatzes 8 ins Innere des Spannmoduls 2 führen. Die durch den Spannuntersatz 50 führenden hydraulischen bzw. pneumatischen Anschlussleitungen 33a, 36a sind nur andeutungsweise dargestellt. Jedenfalls sind die beiden Anschlussleitungen 33a, 36a derart gestaltet, dass sie auch bei radialen Verschiebungen des Spannmoduls 2 im vorgezeichneten Rahmen eine dichte Verbindung ermöglichen. Die Hydraulikleitung 33 mündet radial in einen oberhalb des zentralen Mittelteils des Betätigungskolbens 4 angeordneten Ringraum 34, welcher hydraulisch mit Überdruck beaufschlagt werden kann. Die Pneumatikleitung 36 ist mit einer Vielzahl von Reinigungsöffnungen 37 verbunden, über welche Luft zur Reinigung von Gegenflächen ausgeblasen werden kann. In die eine Seitenfläche der einen Zentriernut 23 ist eine im Durchmesser vergrösserte Ausblasöffnung 37a eingelassen. Da über eine solche Ausblasöffnung 37a der Druck in der Pneumatikleitung schnell abfällt, wenn diese nicht durch einen Zentriernocken verschlossen/abgedichtet ist, kann diese Ausblasöffnung 37a insbesondere dazu genutzt werden, um zu erkennen, ob ein mit einem Spannelement 26 versehener Werkstückträger vorhanden und sicher an der Spannvorrichtung 2 festgespannt ist. Der Vorteil einer vergrösserten Ausblasöffnung 37a mit einem Durchmesser von zumindest 2 mm besteht zudem auch darin, dass diese im Vergleich zu relativ kleinen Öffnungen, welche beispielsweise einen Durchmesser von weniger als 1,5 mm aufweisen, weniger verschmutzungsanfällig ist und kaum verstopfen kann. Zudem ist eine in den unterhalb des Betätigungskolbens 4 angeordneten Druckraum 32 führende Hydraulikleitung 35 andeutungsweise eingezeichnet. Auf der Oberseite des Spannmoduls 2 ist die konisch verlaufende Zentrierfläche 18 erkennbar. Zudem ist einer von drei Stösseln 10 und eine von drei Druckfedern erkennbar. Der Schaft des jeweiligen Stössels 10 ist teilweise in einer Bohrung 38 im Betätigungskolben 4 aufgenommen, wobei die Tiefe der Bohrung 38 derart ausgebildet ist, dass das Ende des Stösselschafts beim Hochfahren des Betätigungskolbens 4 erst ganz am Ende der nach oben gerichteten Bewegung am Boden der Bohrung 38 ansteht und das Ausstosselement 19 durch den Betätigungskolben 4 auf dem letzten Teil seiner Hubbewegung nach oben gedrückt wird. Um den Betätigungskolben 4 nach oben in die Ausgangsstellung zu bewegen, wird der Druckraum 32 unterhalb des Betätigungskolbens 4 hydraulisch derart mit Überdruck beaufschlagt, dass der Betätigungskolben 4 entgegen der Kraft der drei Druckfedern nach oben verschoben wird.

Im Vergleich zu Spannsystemen mit am Werkstückträger angeordneten Spannzapfen und korrespondierend dazu ausgebildeten Spannfuttern können mit der erfindungsgemäss gestalteten Spanneinrichtung wesentlich höhere Spannkräfte realisiert werden, da ein ringförmig gestaltetes Spannelement 26, welches das Spannmodul 2 radial umfasst, eine deutlich grössere Spannfläche besitzt, zumal das zylindrische Spannmodul 2 einen vergleichsweise grossen Aussendurchmesser besitzt und im Vergleich mit herkömmlichen Spannfuttern deutlich mehr Spannorgane 15 aufweist. Durch die in den Betätigungskolben 4 eingelassenen Vertiefungen kann das einzelne Spannorgan 15 zudem höhere Kräfte übertragen.

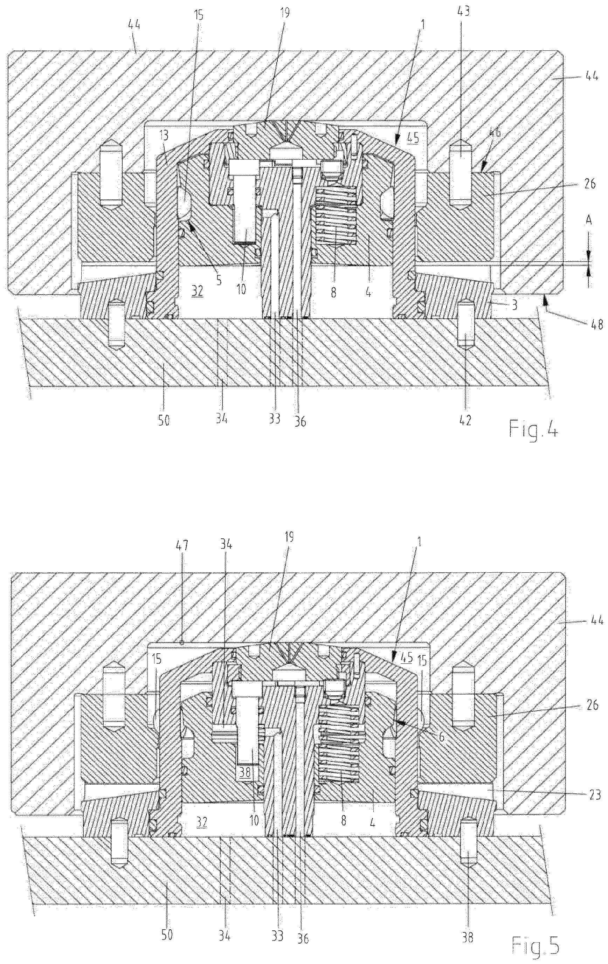

Die Figur 4 zeigt einen Schnitt durch die Spannvorrichtung in der Ausgangsstellung zusammen mit dem lose darauf aufgesetzten Spannelement 26, welches in einer abgestuften Ausnehmung 45 des Werkstückträgers 44 angebracht ist. Die plane und als Z-Auflage dienende Unterseite des Spannelements 26 wie auch dessen Zentriernocken 28 sind gegenüber der Unterseite 48 des Werkstückträgers 44 zurück versetzt. Dadurch ist das jeweilige Spannelement 26 geschützt im Werkstückträger 44 aufgenommen. Um das Fixierelement 3 gegenüber dem Spannuntersatz 50 vor dem Befestigen genau auszurichten, sind Stifte 42 vorgesehen, welche in korrespondierende Sackbohrungen des Fixierelements 3 und des Spannuntersatzes 50 eingesetzt sind. Analog sind Stifte 43 zur Zentrierung des Spannelements 26 gegenüber dem Werkstückträger 44 vorgesehen. Zur Befestigung des Fixierelements 3 an dem Spannuntersatz 50 sind herkömmliche Schraubverbindungen vorgesehen, welche jedoch nicht näher dargestellt sind. Das Spannelement 26 wird ebenfalls mittels nicht näher dargestellten Schrauben an dem Werkstückträger 44 befestigt. Um den Betätigungskolben 4 in die hier dargestellte obere Ausgangsstellung zu verschieben, wird der Druckraum 32 unterhalb des Kolbens 4 unter Überdruck gesetzt. Bei der nach oben gerichteten Bewegung des Betätigungskolbens 4 steht der jeweilige Stössel 10 kurz vor dem Ende der Aufwärtsbewegung am Boden der Bohrung im Betätigungskolben 4 an und macht den letzten Teil der Aufwärtsbewegung mit. Dadurch drücken die Stössel 10 das Ausstosselement 19 um ca. 1mm über die Oberseite des Spanngehäuses 13 hinaus, wodurch sich das Ausstosselement 19 am Boden der abgestuften Ausnehmung 45 anlegt und den Werkstückträger 44 in Z-Richtung abstützt oder leicht anhebt.

Im hochgefahrenen Zustand kommt die Ringnut 5 des Betätigungskolbens 4 auf die Höhe der Spannorgane 15 zu liegen, wodurch diese nach innen in die Ringnut 5 zurückgeschoben werden können, so dass in dem hier dargestellten Ausgangszustand der Spannvorrichtung 1 ein Spannelement 26 auf die Spannvorrichtung 1 aufgesetzt und auch entnommen werden kann.

Indem sowohl die Tiefe der Ausnehmung 45 wie auch die Höhe der Stufe 46 auf die Spannvorrichtung 1 mitsamt dem Spannmodul 2 abgestimmt sind, kommt der Werkstückträger 44 beim Aufsetzen auf die Spannvorrichtung 1 auf dem Ausstosselement 19 zur Anlage. Konkret kommt das Ausstosselement 19 am Boden der abgestuften Ausnehmung 45 im Werkstückträger 44 zur Anlage, bevor das Spannelement 26 durch seine in die Nuten der Spannvorrichtung eingreifenden Nocken in einer Richtung in der X-Y-Ebene endgültig zentriert ist. Jedenfalls sind die Elemente -Werkstückträger 44, - Ausnehmung 45, -Spannelement 26 und -Spannvorrichtung 1 / Austosselement 19 derart aufeinander abgestimmt, dass im lose aufgelegten Zustand des Werkstückträgers 44 ein Spalt in der Grössenordung von ca. 1 mm zwischen den Z-Auflagen 24 (Fig. 1) der Spannvorrichtung 1 und der planen Unterseite 29 (Fig. 1) des Spannelements 26 besteht. Dabei greifen die Nocken des Spannelements 26 in die Nuten der Spannvorrichtung 1 ein und zentrieren das Spannelement 26 in einer Richtung in der X-Y-Ebene grob gegenüber der Spannvorrichtung 1. Indem das Spannelement 26 in eine Ausnehmung des Werkstückträgers 44 eingesetzt und die plane, als Z-Zentrierung dienende Unterseite gegenüber der Unterseite 49 des Werkstückträgers 44 zurück versetzt ist, ist das Spannelement 26 gut gegen äussere Einflüsse wie mechanische Beschädigungen geschützt. Anstelle einer durchgehend planen Unterseite 29 könnte das Spannelement 26 auch nur abschnittweise mit planen Flächenabschnitten versehen werden.

Die Figur 5 zeigt die Spannvorrichtung 1 in der Verriegelungsstellung zusammen mit dem mittels des Spannelements 26 daran festgespannten Werkstückträger 44. Damit sich der Betätigungskolben 4 von der Ausgangs- in die dargestellte Verriegelungsstellung verschieben kann, wird der Überdruck im Druckraum 32 abgebaut, so dass sich der Betätigungskolben 4 unter der Wirkung der Druckfedern 8 nach unten bewegt. Dabei drückt der Betätigungskolben 4 mit seiner auf der Aussenseite angeordneten, sich nach oben leicht konisch erweiternden Druckfläche 6 die Spannkugeln 15 radial nach aussen. Die Spannkugeln 15 legen sich an der ringförmig umlaufenden Spannfläche 27 (Fig. 3) des Spannelements 26 an und ziehen dieses in Z-Richtung nach unten, bis die plane Unterseite des Spannelements 26 auf den Z-Auflagen 24 (Fig. 1) der Spannvorrichtung 1 zur Anlage kommt. Sofern sich das Ausstosselement 19 beim Herunterfahren des Betätigungskolbens 4 nicht selbsttätig in seine untere Ruhestellung bewegt, wird dieses durch den Boden der Ausnehmung 45 im Werkstückträger 44 nach unten gedrückt, zumal die Stössel 10 nicht mehr am Boden der Bohrung 38 im Betätigungskolben 4 anstehen und zusammen mit dem Ausstosselement 19 nach unten verschoben werden können.

Beim Festspannen des Spannelements 26 an der Spannvorrichtung 1 kommen die Nocken des Spannelements 26 an den Nuten der Spannvorrichtung zur Anlage und zentrieren das Spannelement 26 in einer Richtung in der X-Y-Ebene genau gegenüber der Spannvorrichtung 1. Vorzugsweise sind die Zentrierelemente Zapfen-Nut derart aufeinander abgestimmt, dass beide Seitenflächen eines Zentrierzapfens an beiden Nutwandungen der jeweiligen Zentriernut zur Anlage kommen, bevor die plane Unterseite des Spannelements 26 auf den Z-Auflagen 24 (Fig. 1) der Spannvorrichtung 1 aufliegt, namentlich wenn noch ein Spalt in der Grössenordnung von einigen Mikrometern bis zu mehreren hundertstel Millimetern zwischen der Unterseite des Spannelements 26 und den Z-Auflagen 24 besteht. Somit ist die Feinzentrierung zwischen Spannelement 26 und Spannvorrichtung 1 abgeschlossen, bevor das Spannelement 26 auf den Z-Auflagen der Spannvorrichtung zur Anlage kommt.

Um den Zentriervorgang in Z-Richtung abschliessen zu können, sind die wirkungswesentlichen Elemente der Spanneinrichtung 1 bezüglich Dimensionen und Formgebung derart aufeinander abgestimmt, dass das Aufheben des genannten Spalts zwischen der planen Unterseite des Spannelements 26 und den Z-Auflagen 24 der Spannvorrichtung 1 durch Ausnutzung der Materialelastizität im Bereich des Zentrierzapfens und der Zentriernut erfolgen kann. Daher brauchen keine in Z-Richtung federelastisch nachgiebigen Elemente, wie sie bei den nach dem Stand der Technik ausgebildeten Spannsystemen zumeist vorhanden sind, vorgesehen zu werden.

Nach dem Festspannen des Spannelements 26 an der Spannvorrichtung 1 kann die Spannkraft zusätzlich erhöht werden, indem der Ringraum 34 oberhalb des Betätigungskolbens 4 hydraulisch oder pneumatisch mit einem hohen Druck beaufschlagt wird. Da der Betätigungskolben 4 mittels Selbsthemmung in der Verriegelungsposition gehalten wird, bleibt die hohe Spannkraft auch nach Aufhebung des hydraulischen oder pneumatischen Überdrucks bestehen.

Die über die Pneumatikleitung 36 gespeisten Reinigungsöffnungen inklusive der vergrösserten Ausblasöffnung sind derart angeordnet, dass sie beim Festspannen des Spannelements 26 an der Spannvorrichtung 1 durch das Spannelement 26 bzw. dessen Zentrierelemente verschlossen/abgedichtet werden. Dies ermöglicht, dass durch Überwachung des Drucks oder der Luftströmung in der Pneumatikleitung 36 festgestellt werden kann, ob ein Spannelement 26 vorhanden und ggf. sicher festgespannt ist.

Die in den Figuren 1 bis 5 dargestellte Spanneinrichtung 1 bildet das Grundelement zur Bildung eines Spannsystems, mit welchem insbesondere grosse und/oder schwere Werkstücke bzw. Werkstückträger im Arbeitsbereich einer Bearbeitungsmaschine, beispielsweise einer Fräsmaschine, Schleifmaschine, Erodiermaschine oder einer Drehbank, festgespannt werden können. Unter dem Begriff grosse bzw. sehr grosse Werkstückträger werden Werkstückträger verstanden, welche typischerweise eine Dimension zwischen ca. 0.5m und 2m aufweisen. Auf solchen Werkstückträgern können Werkstücke mit einem Gesamtgewicht von bis zu mehreren tausend Kilogramm befestigt werden. Jedenfalls bildet eine solche Spanneinrichtung einen modularen Baustein, mittels welchem grosse bis sehr grosse Spannsysteme realisiert werden können.

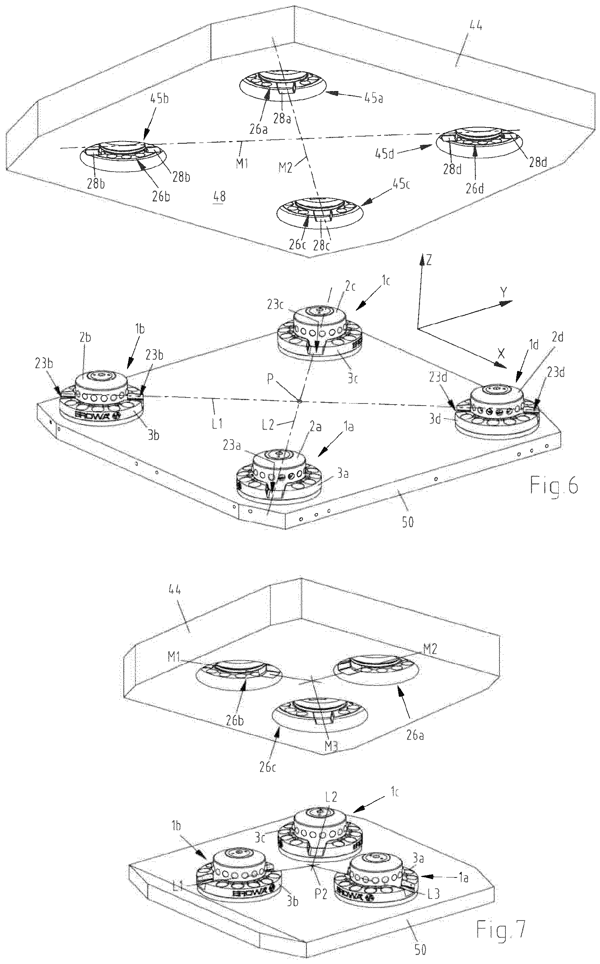

Die Figur 6 zeigt ein erstes Ausführungsbeispiel eines solchen Spannsystems mit vier auf einem Spannuntersatz 50 zu einer Spannanordnung angeordneten Spannvorrichtungen 1a, 1b, 1c, 1d und vier an einem Werkstückträger 44 angeordneten Spannelementen 26a, 26b, 26c, 26d. Wie dargestellt verlaufen die X- und die Y-Achse parallel zur Oberseite/Oberfläche des Spannuntersatzes 50, während die Z-Richtung senkrecht dazu verläuft. Somit ist durch die Oberseite/Oberfläche des Spannuntersatzes 50 die X-Y-Ebene der Spanneinrichtung definiert.

Die vier Spannvorrichtungen 1a, 1b, 1c, 1d sind auf der Oberseite des Spannuntersatzes 50 angeordnet und die vier Spannelemente 26a, 26b, 26c, 26d sind in entsprechenden Ausnehmungen 45a, 45b, 45c, 45d im Werkstückträger 44 befestigt. Der Spannuntersatz 50 kann beispielsweise auch der Tisch einer Bearbeitungsmaschine sein. Sowohl die Spannvorrichtungen 1a, 1b, 1c, 1d wie auch die Spannelemente 26a, 26b, 26c, 26d sind gemäss dem vorgängig erläuterten Ausführungsbeispiel ausgebildet. Der Werkstückträger 44 weist eine durchgehend plane Unterseite 48 auf. Die Oberseite des Spannuntersatzes 50 bildet dabei wiederum die X-Y-Ebene. Die Vorteile einer schwimmenden bzw. verschiebbaren Fixierung des jeweiligen Spannmoduls 2a-2d in der X-Y-Ebene kommen bei Spannanordnungen, welche drei oder mehr Spannvorrichtungen umfassen, ganz besonders zum Tragen. Während bei jeder der vier Spannvorrichtungen 1a, 1b, 1c, 1d das jeweilige Spannmodul 2a, 2b, 2c, 2d schwimmend gelagert ist, sind die vier Spannelemente 26a, 26b, 26c, 26d fest und unverrückbar mit dem Werkstückträger 44 verbunden. Bei den einander diagonal gegenüberliegenden Spannvorrichtungen 1a-1c; 1b-1d bzw. Fixierelementen 3a-3c; 3b-3d liegen die Zentriernuten jeweils auf einer gemeinsamen Längsmittelachse L1, L2 während bei den einander diagonal gegenüberliegenden Spannelementen 26a-26c; 26b-26d deren Zentriernocken 28a-28c; 28b-28d auf einer gemeinsamen Längsmittelachse M1, M2 liegen, wobei die vier Spannvorrichtungen 1a, 1b, 1c, 1d bzw. die Nuten 23a, 23b, 23c, 23d der Fixierelemente 3a, 3b, 3c, 3d in Position und Ausrichtung korrespondierend zu den Spannelementen 26a, 26b, 26c, 26d inklusive deren Zentriernocken 28a, 28b, 28c, 28d angeordnet sind, so dass der Werkstückträger 44 beim Festspannen mittels den vier Spannvorrichtungen 1a, 1b, 1c, 1d in X-, Y- und Z-Richtung ausgerichtet wird. Da die Spannmodule 2a, 2b, 2c, 2d in radialer Richtung bzw. in der X-Y-Ebene schwimmend in den Fixierelementen 3a, 3b, 3c, 3d aufgenommen sind, vermögen diese Längenänderungen des Werkstückträgers 44 gegenüber dem Spannuntersatz 50 bis zu einem bestimmten Mass aufzunehmen/auszugleichen. Allerdings ist darauf zu achten, dass bei der Montage der Abstand zwischen dem jeweiligen Zentrum -Mitte- der auf dem Spannuntersatz 50 befestigten Fixierelemente 3a, 3b, 3c, 3d sowohl lateral wie auch diagonal möglichst exakt dem Abstand zwischen dem jeweiligen Zentrum der an dem Werkstückträger 44 befestigten Spannelementen 26a, 26b, 26c, 26d entspricht, so dass die Spannmodule 2a, 2b, 2c, 2d in radialer Richtung, d.h. in der X-Y-Ebene Dimensionsänderungen - Ausdehnungen bzw. Schrumpfungen- des Werkstückträgers 44 in Relation zum Spannuntersatz 50 auszugleichen vermögen. Auf diese Weise entsteht ein selbstzentrierendes Spannsystem bei dem mechanische Überbestimmungen in der X-Y-Ebene vermieden werden. Indem das Spannmodul 2 bzw. der Betätigungskolben mit einem zweistufigen "Einzug" versehen und das jeweilige Spannmodul 2 in der X-Y-Ebene schwimmend gelagert ist, werden vergleichsweise geringe Anforderungen an die Fertigungstoleranzen der für das Spannen und Zentrieren massgebenden Elemente, namentlich das Spannmodul 2, zusammen mit dem Fixierelement 3 und dem Spannelement 26, gestellt.

Bei der Montage der Spannvorrichtungen 1a, 1b, 1c, 1d auf dem Spannuntersatz 50 und der Spannmodule 2a, 2b, 2c, 2d an dem Werkstückträger 44 ist darauf zu achten, dass der Spannuntersatz 50 und der Werkstückträger 44 in etwa die gleiche Temperatur aufweisen, so dass beispielsweise thermisch bedingte Dimensionsänderungen des Werkstückträgers 44 in beide Richtungen aufgefangen/ausgeglichen werden können. Der Nullpunkt bei einem solchen Spannsystem liegt auf dem Schnittpunkt P der beiden Längsmittelachsen L1, L2 von einander auf dem Spannuntersatz 50 diagonal gegenüberliegenden Spannvorrichtungen 1a, 1c; 1b, 1d. Jedenfalls verschiebt sich der Nullpunkt P auch dann nicht, wenn sich das jeweilige Spannmodul in der X-Y-Ebene in der vorgegebenen Richtung verschieben sollte, beispielsweise um thermisch bedingte Dimensionsänderungen des Werkstückträgers 44 aufzunehmen, so dass bei gegebenem Nullpunkt ein Werkstückträger 44 wiederholt genau auf dem Spannuntersatz 50 festgespannt werden kann. Versuche haben ergeben, dass eine Repetiergenauigkeit beim Festspannen eines Werkstückträgers 44 in der Grössenordnung von ca. +- 5 Mikrometern erreicht wird.

Bei einem quadratischen Spannuntersatz, wie er in der Fig. 6 dargestellt ist, sind die Zentrierelemente -Zentriernuten- von benachbarten Spannvorrichtungen jeweils um 90° zueinander verdreht und die Längsmittelachsen L1, L2 kreuzen sich unter einem Winkel von 90°. Gleiches trifft für quadratische Werkstückträger zu, bei denen die Zentrierelemente -Zentriernocken- von benachbarten Spannelementen ebenfalls um 90° zueinander verdreht sind. Bei rechteckigen aber nicht quadratischen Spannuntersätzen weicht der Kreuzungswinkel der Längsmittelachsen L1, L2 in der Regel von 90° ab.

Indem die Spannmodule 2a-2c der Spannvorrichtungen 1a-1d mit grossflächigen konischen Zentrierflächen 18 (Fig. 3) versehen sind, ist das Positionieren des Werkstückträgers 44 gegenüber dem Spannuntersatz 50 vergleichsweise einfach, da sich bei mittleren Baugrössen der jeweiligen Spanneinrichtung, deren Spannmodule 2 einen Durchmesser in der Grössenordnung von ca. 8 bis 12 cm aufweisen, das jeweilige Spannelement 26 gegenüber der zugeordneten Spannvorrichtung bis zu einem lateralen Versatz von bis zu ca. 2 cm beim Aufsetzen selber zentriert. Somit braucht der Werkstückträger 44 gegenüber dem Spannuntersatz 50 vor dem Aufsetzen nur grob, d.h. auf ca. 1-2 cm genau positioniert zu werden. Beim Absenken findet dann die Feinpositionierung statt, indem das jeweilige Spannelement mit seiner Unterseite auf der konischen Zentrierfläche des korrespondierenden Spannmoduls 2a-2d entlang gleitet bis das jeweilige Spannelement 26a-26d konzentrisch zu dem zugehörigen Spannmodul 2a-2d ausgerichtet ist. Bei diesem Zentriervorgang können sich zudem die Spannmodule 2a-2d entlang der vorgegebenen Richtung in der X-Y-Ebene verschieben und genau auf die korrespondierenden Spannelemente 26a-26d ausrichten, indem sie aufgrund ihrer schwimmenden Lagerung den diagonalen Abstand der korrespondierenden Spannelemente 26a-26c im Wesentlichen übernehmen. Danach kann der Werkstückträger 44 abgesenkt werden, so dass die Zentriernocken des jeweiligen Spannelements 26a-26d in die Nuten des korrespondierenden Fixierelements 3a-3d eingreifen und den Werkstückträger 44 winkelgenau ausrichten. Beim anschliessenden Festspannen des Werkstückträgers 44 erfolgt dann noch die genaue Anpassung des diagonalen Abstands, indem durch die am jeweiligen Spannelement 26a-26d angreifenden Spannkugeln des Spannmoduls 2a-2d letzteres genau zur Mitte des korrespondierenden Spannelements 26a-26d hin bewegt wird. Dabei ziehen die Spannkugeln des Spannmoduls 2a-2d das jeweilige Spannelement 26a-26d nach unten bis dieses mit seiner planen Unterseite auf den Z-Auflagen des jeweiligen Fixierelements 3a-3c zur Auflage kommt. Indem die Fixierelemente 3a-3d auf dem Spannuntersatz 50 befestigt und das jeweilige Spannmodul 2a-2d in Z-Richtung mittels Spielpassung in dem jeweiligen Fixierelement 3a-3d aufgenommen ist, können die Spannmodule 2a-2d beim Festspannen des Werkstückträgers 44 nicht nach oben "ausweichen", so dass eine genügend hohe Spannkraft aufgebracht und in Z-Richtung übertragen werden kann. Wenn davon gesprochen wird, dass das Fixierelement 3 in Z-Richtung unverschiebbar ist, dann heisst das nicht, dass dieses nicht innerhalb einer sehr engen Toleranz von einigen Mikrometern in Z-Richtung nachgiebig ist, bedingt einerseits durch das Spiel der Spielpassung und andererseits durch die Elastizität der verschiedenen Elemente und Materialien.

Die Fig. 7 zeigt ein alternatives Ausführungsbeispiel eines Spannsystems, welches sich für kleinere Werkstückträger eignet. Dieses Spannsystem weist drei auf einem Spannuntersatz 50 angeordneten Spannvorrichtungen 1a, 1b, 1c und drei an einem Werkstückträger 44 angeordnete Spannelemente 26a, 26b, 26c auf. Die Spannvorrichtungen 1a, 1b, 1c sind gleichmässig verteilt auf dem Spannuntersatz angeordnet, so dass alle drei Spannvorrichtungen 1a, 1b, 1c den gleichen Abstand zueinander haben und die durch die Zentrierelemente -Nuten- der auf dem Spannuntersatz angeordneten Fixierelemente 3a, 3b, 3c gelegten Längsmittelachsen L1, L2, L3 jeweils einen Winkel von 120° miteinander einschliessen. Bei diesem Beispiel liegt der Nullpunkt auf dem Schnittpunkt P2 der drei Längsmittelachsen L1, L2, L3. Die am Werkstückträger 44 angeordneten Spannelemente 26a, 26b, 26c sind korrespondierend zu den Spannvorrichtungen 1a, 1b, 1c des Spannuntersatzes 50 angeordnet. Im festgespannten Zustand verlaufen die durch die Zentrierelemente -Nocken- verlaufenden Längsmittelachsen M1, M2, M3 des Werkstückträgers 44 parallel zu den durch die Zentrierelemente -Nuten- der Fixierelemente 3a, 3b, 3c gelegten Längsmittelachsen L1, L2, L3.

Die Funktionsweise beim Festspannen des Werkstückträgers 44 auf dem Spannuntersatz 50 bzw. der Spannanordnung ist grundsätzlich dieselbe wie bei dem Ausführungsbeispiel gemäss Fig. 6, so dass hier nicht weiter darauf eingegangen wird.

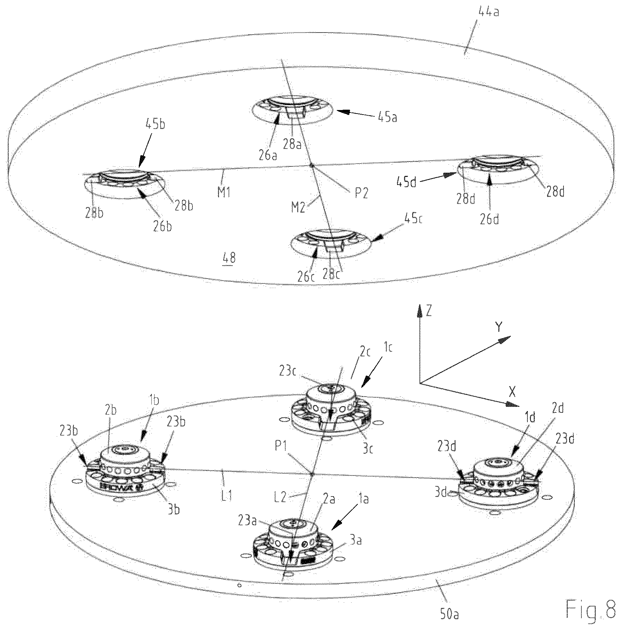

Die Fig. 8 zeigt ein alternatives Ausführungsbeispiel eines Spannsystems, welches mit einem runden Spannuntersatz 50a und einem runden Werkstückträger 44a versehen ist. Da sowohl die Spannvorrichtungen wie auch die Spannelemente identisch zu denjenigen gemäss Figur 6 ausgebildet sind, tragen diese auch identische Bezugszeichen. Dieses Spannsystem weist vier gleichmässig entlang einer Kreislinie auf dem Spannuntersatz 50a zu einer Spannanordnung angeordnete Spannvorrichtungen 1a, 1b, 1c, 1d und vier korrespondierend dazu an dem Werkstückträger 44a angeordnete Spannelemente 26a, 26b, 26c, 26d auf. Die X- und die Y-Achsen verlaufen auch hier parallel zur Oberseite/Oberfläche des Spannuntersatzes 50a und bilden die X-Y-Ebene, während die Z-Richtung senkrecht dazu verläuft.

Die vier Spannvorrichtungen 1a, 1b, 1c, 1d sind auf der Oberseite des Spannuntersatzes 50a, vorzugsweise in dessen äusserem Bereich, d.h. jedenfalls nicht zentrumsnah, angeordnet, während die Spannelemente 26a, 26b, 26c, 26d korrespondierend dazu angeordnet und in entsprechenden Ausnehmungen 45a, 45b, 45c, 45d geschützt im Werkstückträger 44 aufgenommen sind. Die Spannmodule 2a-2d sind in der X-Y-Ebene wiederum schwimmend gelagert. Bei den einander diametral gegenüberliegenden Spannvorrichtungen 1a-1c; 1b-1d bzw. Fixierelementen 3a-3c; 3b-3d liegen die Zentriernuten 23a-23c; 23b-23d wiederum auf einer gemeinsamen Längsmittelachse L1, L2 während bei den einander diametral gegenüberliegenden Spannelementen 26a-26c; 26b-26d deren Zentriernocken 28a-28c; 28b-28d auf einer gemeinsamen Längsmittelachse M1, M2 liegen, wobei die vier Spannvorrichtungen 1a, 1b, 1c, 1d bzw. die Nuten 23a, 23b, 23c, 23d der Fixierelemente 3a, 3b, 3c, 3d in Position und Ausrichtung korrespondierend zu den Spannelementen 26a, 26b, 26c, 26d inklusive deren Zentriernocken 28a, 28b, 28c, 28d angeordnet sind, so dass der Werkstückträger 44a beim Festspannen mittels den vier Spannvorrichtungen 1a, 1b, 1c, 1d in X-, Y- und Z-Richtung ausgerichtet wird.

Auch hier gilt wieder, dass ein Anordnen der Spannvorrichtungen 1a, 1b, 1c, 1d im äusseren Bereich des Spannuntersatzes 50a den Vorteil mit sich bringt, dass eine solche Spanneinrichtung sowohl sehr hohe Torsionsmomente wie auch sehr hohe Kippmomente aufnehmen kann.

Die durch die jeweiligen Zentrierelemente -Zentriernuten 23a, 23b, 23c, 23d- eines Spannmoduls 2a, 2b, 2c, 2d führenden Längsachsmittelachsen L1, L2 kreuzen sich im Zentrum P1 des Spannuntersatzes 50a, während die durch die jeweiligen Zentrierelemente -Zentriernocken 28a, 28b, 28c, 28d- eines Spannelements 26a, 26b, 26c, 26d führenden Längsachsmittelachsen M1, M2 sich im Zentrum P2 des Werkstückträgers 44a kreuzen.

Im Bedarfsfall kann natürlich auch ein runder Spannuntersatz mit einem rechteckigen Werkstückträger oder ein runder Werkstückträger mit einem rechteckigen Spannuntersatz kombiniert werden.

Es versteht sich, dass die vorgängigen Ausführungsbeispiele nicht als abschliessend oder umfassend zu betrachten sind. So könnten im Rahmen der Erfindung, alternativ zu den Ausführungsbeispielen gemäss den Figuren 6, 7 und 8, auch Spannsysteme mit mehr als drei bzw. vier Spannvorrichtungen realisiert werden. Beispielsweise können Spannsysteme mit sechs oder acht Spannvorrichtungen gebildet werden, wobei bei sehr grossen Spannsystemen das jeweilige Spannmodul radial, d.h. in der X-Y-Ebene, ggf. um mehr als die vorgängig angegebenen 0,5 mm verschiebbar sein kann. Bei mehr als vier Spannvorrichtungen ist es auch nicht zwingend notwendig, dass sämtliche Spannvorrichtungen bzw. Spannelemente mit Zentrierelementen-Zentriernuten/Zentriernocken- versehen sind, sondern ggf. kann bei einzelnen Spannvorrichtungen und/oder Spannelementen auf die Zentrierelemente verzichtet werden, so dass die jeweilige Spannvorrichtung nur eine Spann- aber keine Zentrierfunktion übernimmt. Der Begriff Werkstückträger steht auch nicht zwingend immer für ein Element zur Aufnahme von Werkstücken, sondern ggf. kann auch ein Werkzeug oder etwas Anderes daran befestigt werden, wobei die Spannelemente ggf. auch direkt am Werkstück befestigt werden könnten, so dass das Werkstück selber der Werkstückträger wäre. Zudem muss ein Werkstückträger auch nicht rund oder rechteckig sein, sondern er kann beispielsweise auch oval, sechs- oder achteckig sein.

Einige Vorteile von erfindungsgemäss gestalteten Spannvorrichtungen bzw. Spannsystemen lassen sich wie folgt zusammenfassen:
- Indem das jeweilige Spannmodul derart schwimmend gelagert ist, dass es nach dem Fixieren in der X-Y-Ebene noch verschiebbar ist, können Dimensionsänderungen des Werkstückträgers bei sehr hoher Spanngenauigkeit aufgefangen werden;
- Durch die schwimmende Lagerung der Spannmodule kann eine mechanische Überbestimmung des Spannsystems in der X-Y-Ebene vermieden werden;
- Das jeweilige Spannmodul kann sehr hohe Spann- und Haltekräfte generieren und auch hohe Querkräfte aufnehmen;
- Die Spannvorrichtung bzw. das jeweilige Spannmodul ist einfach und kompakt aufgebaut und besitzt eine vergleichsweise geringe Bauhöhe;
- Die Spannelemente können mechanisch geschützt an dem Werkstückträger fixiert werden;
- Mit den in modularer Bauweise ausgebildeten Spannvorrichtungen und Spannelementen können mittlere bis sehr grosse Spannsysteme für mittlere bis sehr grosse und schwere Werkstückträger realisiert werden;
- Auch sehr grosse Werkstückträger können mit einer Wiederholgenauigkeit im Bereich von ca. 10 bis 20 Mikrometern auf dem Spannuntersatz festgespannt werden;
- Die Spannvorrichtungen können einfach und schnell an unterschiedlich gestalteten Spannuntersätzen angebracht werden;
- Die Spannelemente können einfach und schnell an unterschiedlich gestalteten Werkstückträgern angebracht werden;
- Das jeweilige Spannelement wird mittels des mechanisch und ggf. hydraulisch oder penumatisch zusätzlich belasteten Betätigungskolbens sicher verriegelt;
- Der Betätigungskolben wird mittels Selbsthemmung in der Verriegelungsstellung gehalten, so dass auch bei einem Energieausfall das Spannelement sicher festgespannt bleibt.
- Die Druckfedern stellen sicher, dass die Spannkraft auch im energiefreien Zustand erhalten bleibt;
- Die Spannvorrichtungen weisen ein schmutztolerantes Design auf und sind einfach zu reinigen;
- Das Spannsystem reagiert unempfindlich in Bezug auf temperaturbedingte Längenänderungen des Werkstückträgers;
- Indem die jeweilige Spannvorrichtung aussen bzw. in einem Eckbereich angeordnet ist, und somit die Zentrierung wie auch die Niederhaltung dort stattfindet, können insbesondere im Vergleich mit zentrumsnah angeordneten Spannvorrichtungen, sowohl sehr hohe Torsionsmomente wie auch sehr hohe Kippmomente aufgenommen werden.

**Bezugszeichenliste :**

| | | | |
|---|---|---|---|
| 1. | Spannvorrichtung | 36. | Pneumatikleitung |
| 2. | Spannmodul | 37. | Reinigungsöffnungen |
| 3. | Fixierelement | 38. | Bohrung |
| 4. | Betätigungskolben | 39. | Druckraum oberhalb Kolben |
| 5. | Ringnut | 40. | Unterseite Spannmodul |
| 6. | Druckfläche | 41. | |
| 7. | axiale Vertiefungen | 42. | Stifte Unterlage |
| 8. | Druckfedern | 43. | Stifte Werkstückträger |
| 9. | Einsatz | 44. | Werkstückträger (Palette) |
| 10. | Stössel | 45. | abgestufte Ausnehmung |
| 11. | Haltering | 46. | Stufe |
| 12. | | 47. | Boden der Ausnehmung |
| 13. | Spanngehäuse | 48. | Unterseite Werkstückträger |
| 14. | Bohrungen | 49. | |
| 15. | Spannkugeln (Spannorgane) | 50. | Spannuntersatz |
| 16. | Schulter | 51. | |
| 17. | zentrale Bohrung | 52. | |
| 18. | konische Zentrierfläche | 53. | |
| 19. | Ausstosselement | 54. | |
| 20. | | 55. | |
| 21. | Ausnehmung (Fixierelement) | 56. | |
| 22. | Vorsprung (Fixierelement) | 57. | |
| 23. | Zentriernuten (Fixierelement) | 58. | |
| 24. | Z-Auflagen (Fixierelement) | 59. | |
| 25. | | 60. | |
| 26. | Spannelement | 61. | |
| 27. | Spannfläche | 62. | |
| 28. | Zentriernocken | 63. | |
| 29. | plane Unterseite | 64. | |
| 30. | Schrauben Spannvorrichtung | 65. | |
| 31. | Schrauben Spannelement | 66. | |
| 32. | Druckraum (unterhalb Kolben) | 67. | |
| 33. | Hydraulikleitung | 68. | |
| 34. | Ringraum (oberhalb Kolben) | 69. | |
| 35. | Zuführleitung hydraulisch | 70. | |

## Patentansprüche

1. Spanneinrichtung mit einer auf einem Spannuntersatz (50) befestigbaren Spannvorrichtung (1) und einem daran festspannbaren Spannelement (26), **dadurch gekennzeichnet, dass** die Spannvorrichtung (1) ein mit Spannorganen (15) versehenes Spannmodul (2) aufweist, welches mittels eines Fixierelements (3) auf dem Spannuntersatz (50) fixierbar ist, wobei das Fixierelement (3) derart ausgebildet ist, dass das Spannmodul (2) damit in der durch die Oberseite des Spannuntersatzes (50) gebildeten X-Y-Ebene verschiebbar auf dem Spannuntersatz (50) fixierbar ist.

2. Spanneinrichtung nach Anspruch 1, **dadurch gekennzeichnet, dass** das Spannmodul (2) im fixierten Zustand des Fixierelements (3) gegenüber dem Fixierelement (3) in der X-Y-Ebene verschiebbar ist, während es in Z-Richtung mittels Spielpassung in dem Fixierelement (3) aufgenommen ist, und dass das Fixierelement (3) mit Z-Auflageflächen (24) für das Spannelement (26) versehen ist.

3. Spanneinrichtung nach Anspruch 1 oder 2, **dadurch gekennzeichnet, dass** das Fixierelement (3) Zentriernuten (23) oder Zentriernocken und das Spannelement (26) korrespondierend dazu ausgebildete Zentriernocken (28) bzw. Zentriernuten zum Zentrieren des Spannelements (26) gegenüber dem Fixierelement (3) in der X-Y-Ebene in einer Richtung aufweist.

4. Spanneinrichtung nach einem der vorhergehenden Ansprüche, **dadurch gekennzeichnet, dass** das Spannmodul (2) im Wesentlichen zylindrisch und das Fixierelement (3) im Wesentlichen ringförmig ausgebildet ist, wobei das Spannmodul (2) in der X-Y-Ebene mit radialem Spiel schwimmend im Fixierelement (3) aufgenommen ist.

5. Spanneinrichtung nach Anspruch 4, **dadurch gekennzeichnet, dass** das Spannmodul (2) auf der Aussenseite mit einer umlaufenden Schulter (16) und das Fixierelement (3) auf der Innenseite mit einer korrespondierend dazu ausgebildeten Ausnehmung (21) versehen ist, wobei der Aussendurchmesser der Schulter (16) um zumindest 0,2mm, insbesondere um zumindest 0,5mm kleiner ist als der Durchmesser der Ausnehmung (21).

6. Spanneinrichtung nach Anspruch 5, **dadurch gekennzeichnet, dass** das Spannmodul (2) in Z-Richtung mittels Spielpassung in dem Fixierelement (3) aufgenommen ist, insbesondere indem die Höhe der Schulter (16) derart an die Höhe der Ausnehmung (21) angepasst ist, dass in Z-Richtung eine Spielpassung zwischen der Schulter (16) und der Ausnehmung (21) gebildet ist.

7. Spanneinrichtung nach einem der Ansprüche 3 bis 5, **dadurch gekennzeichnet, dass** das Spannmodul (2) mit einer Vielzahl von über den Umfang verteilt angeordneten Spannorganen (15) versehen ist, und das Spannelement (26) auf der Innenseite mit einer ringförmig umlaufenden Spannfläche (27) versehen ist, an welcher sich die Spannorgane (15) zum Festspannen anlegen.

8. Spanneinrichtung nach einem der vorhergehenden Ansprüche, **dadurch gekennzeichnet, dass** das Spannmodul (2) einen federbelasteten Betätigungskolben (4) aufweist, der zur Betätigung der Spannorgane (15) axial beweglich im Innern des Spannmoduls (2) angeordnet ist.

9. Spanneinrichtung nach Anspruch 8, **dadurch gekennzeichnet, dass** der Betätigungskolben (4) von einer Wirkstellung, in der er unter der Wirkung von Federn (14) steht und ggf. hydraulisch oder pneumatisch zusätzlich belastet ist, und in welcher er die Spannorgane (15) radial nach aussen drückt, pneumatisch oder hydraulisch in eine Ausgangsstellung verschiebbar ist, in welcher die Spannorgane (15) entlastet und radial nach innen schiebbar sind, wobei der Betätigungskolben (4) insbesondere mittels Selbsthemmung in der Wirkstellung gehalten ist.

10. Spanneinrichtung nach Anspruch 8 oder 9, **dadurch gekennzeichnet, dass** der Betätigungskolben (4) in Wirkverbindung mit einem in Z-Richtung verschiebbaren Ausstosselement (19) bringbar ist, welches mittels des Betätigungskolbens (4) über die Oberseite des Spannmoduls (2) hinaus bewegbar ist.

11. Spanneinrichtung nach einem der Ansprüche 8 bis 10, **dadurch gekennzeichnet, dass** der Betätigungskolben (4) in Z-Richtung verlaufende Vertiefungen (7) aufweist, welche derart auf die Spannorgane (15) abgestimmt sind, dass beim Festspannen eines Spannelements (2) eine vergrösserte Auflagefläche zwischen dem jeweiligen Spannorgan (15) und dem Betätigungskolben (4) bewirkt wird.

12. Spanneinrichtung nach Anspruch 10, **dadurch gekennzeichnet, dass** die Oberseite des Spannmoduls (2) kegelstumpfförmig ausgebildet ist und im Zentrum des Kegelstumpfes das Ausstosselement (19) angeordnet ist.

13. Spannsystem mit einem Spannuntersatz (50, 50a), einem Werkstückträger (44, 44a) und zumindest drei nach einem der Ansprüche 1 bis 12 ausgebildeten Spanneinrichtungen, welche zumindest drei auf dem Spannuntersatz (50, 50a) angeordnete Spannvorrichtungen (1a, 1b, 1c, 1d) und eine korrespondierende Anzahl von an dem Werkstückträger (44, 44a) angeordneten Spannelementen (26a, 26b, 26c, 26d) aufweist, wobei die Oberseite des Spannuntersatzes (50, 50a) die X-Y-Ebene bildet, **dadurch gekennzeichnet, dass** die jeweilige Spannvorrichtung (1a, 1b, 1c, 1d) mit ersten Zentrierelementen (23a, 23b, 23c, 23d) und das dazugehörige Spannelement (26a, 26b, 26c, 26d) mit dazu korrespondierenden weiteren Zentrierelementen (28a, 28b, 28c, 28d) zum Zentrieren des jeweiligen Spannelements (26a, 26b, 26c, 26d) gegenüber der Spannvorrichtung (1a, 1b, 1c, 1d) in einer Richtung in der X-Y-Ebene versehen ist, wobei zumindest bei zwei Spannvorrichtungen (1a, 1b, 1c, 1d) und zwei korrespondierend dazu angeordneten Spannelementen (26a, 26b, 26c, 26d) die Richtungen in der X-Y-Ebene unterschiedlich sind.

14. Spannsystem nach Anspruch 13, **dadurch gekennzeichnet, dass** der Spannuntersatz (50) im Wesentlichen rechteckig ausgebildet ist und eine gerade Anzahl an Spannvorrichtungen (1a-1d) aufweist, wobei zumindest in jedem Eckbereich eine Spannvorrichtung (1a-1d) angeordnet ist, und wobei die durch die Zentrierelemente (23a-23d) der jeweiligen, im Eckbereich angeordnete Spannvorrichtung (1a-1d) führenden Längsachsmittelachsen (L1, L2) auch durch das Zentrum von einander diagonal gegenüberliegenden Spannvorrichtungen (2a-2c; 2b-2d) führen.

15. Spannsystem nach Anspruch 13 oder 14, **dadurch gekennzeichnet, dass** der Werkstückträger (44a) im Wesentlichen rund ausgebildet und mit zumindest drei in dessen äusserem Bereich angeordneten Spannelementen (26a-26d) versehen ist, wobei die Spannelemente (26a-26d) insbesondere derart angeordnet sind, dass sich die durch die jeweiligen Zentrierelemente (28a-28d) eines Spannelements (26a-26d) führenden Längsachsmittelachsen (M1, M2) im Zentrum des Werkstückträgers (44a) treffen oder kreuzen.

16. Spannsystem nach Anspruch 13, oder 14, **dadurch gekennzeichnet, dass** der Werkstückträger (44) im Wesentlichen rechteckig ausgebildet ist und zumindest in jedem Eckbereich ein Spannelement (26a-26d) angeordnet ist, wobei die durch die Zentrierelemente (28a-28d) der jeweiligen, im Eckbereich angeordneten Spannelemente (26a-26d) führenden Längsachsmittelachsen auch durch das Zentrum von einander diagonal gegenüberliegenden Spannelementen (26a-26c; 26b-26d) führen.

17. Spannsystem nach Anspruch 15 oder 16, **dadurch gekennzeichnet, dass** das jeweilige Spannelement (26a-26d) derart in einer Ausnehmung (45a-45d) des Werkstückträgers (44, 44a) angeordnet ist, dass dessen plane Unterseite (29) wie auch die Zentrierelemente (28a-28d) gegenüber der Unterseite (48) des Werkstückträgers (44, 44a) zurückversetzt ist.

18. Spannelement (26a-26d) zur Verwendung in einer Spanneinrichtung nach einem der Ansprüche 1 bis 12 oder in einem Spannsystem nach einem der Ansprüche 13 bis 17, **dadurch gekennzeichnet, dass** das Spannelement (26) im Wesentlichen ringförmig ausgebildet ist und auf der Innenseite eine ringförmig umlaufende Spannfläche (27) aufweist, an welcher sich Spannorgane (15) zum Festspannen anlegen können, und dass das Spannelement (26) zumindest abschnittweise mit einer planen, als Z-Auflage dienenden Unterseite (29) versehen ist.
